# EUROPEAN PATENT APPLICATION

(11) **EP 4 671 126 A1**
(43) Date of publication of application: **31.12.2025**
(21) Application number: 25184740.6
(22) Date of filing: 24.06.2025
(51) Int. Cl.: B64C 25/34, B64C 25/36, B64C 25/60, B64C 25/50, B62D 17/00, B64C 25/00, B64C 25/32

(54) **A WHEEL ADJUSTMENT SYSTEM**

(30) Priority: 27.06.2024 TR 2024008197
(71) Applicant: Tusas- Turk Havacilik Ve Uzay Sanayii Anonim Sirketi, 06980 Ankara (TR)
(72) Inventor: PUSKUL, Hasan, 06980 ANKARA (TR); CEYLAN, Musa, 06980 ANKARA (TR); YILDIRIM, Sena Gozde, 06980 ANKARA (TR); YILMAZ, Yasin, 06980 ANKARA (TR)
(74) Representative: Berkkam, Ayfer

(57) **Abstract**

The present invention comprises a body (G), a ground (Z) on which the body (G) moves, at least one piston (2) located on the body (G) and damping the reaction force on the ground (Z) against the weight of the body (G) due to the body (G) contacting the ground (Z), at least one wheel (T) located on the piston (2) and allowing the body (G) to move on the ground (Z), a first position (I) in which the wheel (T) is positioned in a predetermined position, at least one shaft (3) connecting the wheel (T) and the piston (2) and transferring to the piston (2) the force generated when the wheel (T) contacts the ground (Z), at least one protector (4) located in the area where the piston (2) is connected to the shaft (3), which prevents the outflow of fluid from the piston (2), which is positioned on the shaft (3) and is located at the end where the shaft (3) is connected to the piston (2), at least one actuator (5) located on the protector (4), which allows changing the angle of the wheel (T) in the first position (I) with respect to the directional axis along which it moves on the ground (Z), at least one lever (6) on the actuator (5), which is connected at one end to the shaft (3) and at the other end to the actuator (5) so as to be almost parallel to the piston (2), thereby enabling the actuator (5) to trigger the shaft (3).

## Description

The present invention relates to a system for controlling the camber angle of wheels in vehicles in order to vary the amount of contact on the ground.

The parallelism of the axle in the wheel set of the vehicles to the ground is disrupted due to the changing axle angle as a result of overloading. As a result of the axle making an angle with the ground, it causes the tire to slip from the center of the compression point. This affects the efficiency of the tire used. In vehicles, mechanisms on the axle are used to change the amount of the tire's contact surface, which is preferably expressed as the camber angle in the case of the wheels on the landing gear of aircraft such as aircraft helicopters. The camber angle is defined as the angle between the axis perpendicular to the ground and the vertical axis of the vehicle relative to the ground when viewed from the direction of travel of a vehicle.

The Chinese patent document CN108082458A, which is included in the state of the art, describes the design of a self-adaptive landing gear and a helicopter landing gear structure. The landing gear comprises a first bumper, a second bumper, a clutch arm and a travel cylinder. The gripping arm and lower bumper rotate around the upper joint to adjust the attitude of the landing gear to accommodate the ship's rocking platform landing.

A wheel adjustment system developed with this invention allows the wheel to maintain parallelism of the axle to the ground to increase the ground grip of the wheel and to change the contact surface of the landing gear in the event that the wheel hits the ground, thereby extending the life of the wheel.

Another purpose of the present invention is to provide an effective tire life by ensuring that the lateral walls of the tire are not worn by keeping the tire compression point in the center.

A wheel adjustment system as defined in the first claim and the claims dependent thereon, which is realized to achieve the object of the invention, comprising a body which is a helicopter-like aircraft or a car-like land vehicle, a ground on which the body moves, a piston which dampens the gravitational force due to the weight of the body when the body contacts the ground, a wheel which enables the body to move on the ground and which is connected to the body by means of the piston, a first position (I) in which the wheel is preferably parallel to the direction in which the piston extends and in which the body is positioned so that an angle difference is formed between the body and the ground, a piston on which at least one shaft, one side of which is connected to the wheel and the other side to the piston, is located on the piston so that the shaft is on the side where the shaft is connected to the piston, preventing the hydraulic fluid in the piston from coming out, It includes a protector containing a shaft, an actuator that allows the angle of the wheel on the axis on which it travels to be changed, a lever extending from the actuator to the shaft in the direction in which the piston extends, transmitting the movement from the actuator to the shaft and changing the angle of the shaft and the wheel relative to the ground.

The wheel adjustment system of the invention comprises a cam located on the side where the lever extends to the shaft, which allows the angle of the shaft to be changed. The cam makes a spring movement so as to be centered on a point on the axis of extension of the piston. The cam is located on the guard under the shock absorbing pistons. The cam triggers the shaft with the actuator. There is a second position (II) where the wheel in the first position (I) is moved to change the camber angle and is brought to a camber angle with a different amount of contact surface. On the side where the arm is connected to the protector, there is a groove located on the protector. Thanks to its hollow structure, the groove allows the cam placed in it to move. The cam moves in the groove, allowing the shaft to pass between the first position (I) and the second position II). The thread transfers the movement of the lever to the protector to keep the compression point of the wheel in the center.

In one embodiment of the invention, the wheel adjustment system comprises a rolling direction (Y) in the direction of rotation of the direction on the axis in the direction of the wheel's travel, a bore on the axis on which the piston extends for positioning the protector on the piston, and a pin positioned in the bore by the user and/or the manufacturer, which allows the shaft to rotate angularly in the rolling direction to be centered on the bore.

In one embodiment of the invention, the wheel adjustment system comprises a first sensor located on the spindle for reading motion and/or angle data from the wheel, a second sensor located on the protector for reading motion and/or angle data from the piston, at least one processor for closed-loop self-adjustment of the actuator for switching the wheel between the first position (I) and the second position (II) by comparing preferably force data received from the first sensor and the second sensor, thereby adjusting the operating range of the lever.

In one embodiment of the invention, the wheel adjustment system comprises a processor that enables the data received from the first sensor to be compared with the data received from the second sensor. The processor compares the data read from the first sensor and the data read from the second sensor and as a result of the high measurement of the data from the first sensor, the actuator moves the lever in the amount predetermined by the user. With the movement of the cam in the groove, the shaft is moved so that the wheel has a positive camber angle. By transmitting the command for the arm to move in the opposite direction to the ground, the angle of the shaft is changed. The processor compares the data read from the first sensor and the data read from the second sensor and as a result of the high measurement of the data received from the first sensor, the actuator moves the arm in the amount predetermined by the user. With the movement of the cam in the groove, the movement of the shaft is provided for the wheel to have a negative camber angle. By transmitting the command for the arm to move in the direction towards the ground, the angle of the shaft is changed. By comparing the data read from the first sensor and the data read from the second sensor, the processor ensures that the camber angle of the wheel remains constant at the same angle if it is preferably measured equal to the predetermined value range. The angle of the wheel is maintained by transmitting the command to maintain the distance of the amount of movement of the arm on the actuator side. The process steps are repeated in a closed loop.

In one embodiment of the invention, the wheel adjustment system comprises a servomotor which enables the actuator having an electronic trigger to move the arm in such a way that the shaft is substantially parallel to the ground, at least one gear which transfers the movement of the servomotor to the arm and is driven by the servomotor, and at least one gear set which moves the shaft in such a way that the shaft is moved to a parallel position with respect to the ground in order to balance the forces perpendicular to the ground acting on the shaft by creating a high force by reciprocating with the gear.

In one embodiment of the invention, the wheel adjustment system comprises a plurality of threads on the lever for transferring the movement in the gear train to the lever and for determining the amount of movement.

In one embodiment of the invention, the wheel adjustment system comprises a body, preferably an aircraft, helicopter and unmanned aerial vehicle similar to an aircraft, and a lever for changing the angle of depression of the wheel in the landing gear of the aircraft between the first position (I) and the second position (II) when the wheel touches the ground according to the values read by means of the first sensor and the second sensor.

The wheel adjustment system for achieving the object of the present invention is shown in the accompanying figures;
Figure 1 - Schematic front view of the detail area A of the wheel alignment system with actuator, lever and cam in the first position (I).
Figure 2 - Front view of the wheel adjustment system in the second position (II).
Figure 3 - Front view of the wheel alignment system where the piston is connected to the body.
Figure 4 - Front view of the wheel adjustment system.
Figure 5 - A detail view of the wheel adjustment system.
Figure 6 - Detail view of the actuator in the wheel adjustment system.

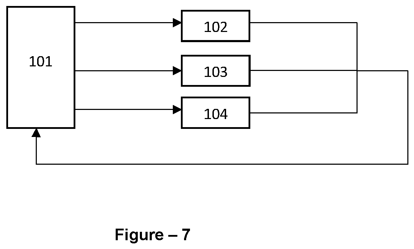

Figure 7 - Schematic view of the method of the processor in the wheel adjustment system.

The parts in the figures are numbered one by one and the corresponding numbers are given below.
1. Wheel adjustment system
2. Piston
3. Shaft
4. Protector
5. Actuator
6. Lever
7. Cam
8. Groove
9. Hole
10. Pin
11. First sensor
12. Second sensör
13. Processor
14. Servo motor
15. Gear
16. Gear set
17. Thread
(G) Body
(T) Wheel
(Y) Rolling direction
(Z) Ground
(I) First Position
(II) Second Position

A wheel adjustment system (1), a body (G), a ground (Z) on which the body (G) moves, at least one piston (2) located on the body (G) and damping the reaction force on the ground (Z) against the weight of the body (G) due to the body (G) contacting the ground (Z), at least one wheel (T) located on the piston (2) and allowing the body (G) to move on the ground (Z), a first position (I) in which the wheel (T) is positioned in a predetermined position, at least one shaft (3) connecting the wheel (T) and the piston (2) and transferring to the piston (2) the force generated by the wheel (T) contacting the ground (Z), at least one protector (4) located in the area where the piston (2) is connected to the shaft (3), which prevents the outflow of fluid from the piston (2), which is positioned on the shaft (3) and is located at the end where the shaft (3) is connected to the piston (2), at least one actuator (5) located on the protector (4), which allows changing the angle of the wheel (T) in the first position (I) with respect to the directional axis along which it moves on the ground (Z), The actuator (5) comprises at least one lever (6), which is connected at one end to the shaft (3) and at the other end to the actuator (5), so that the actuator (5) can trigger the shaft (3), so as to be almost parallel to the piston (2). (Figure-3 and Figure- 4)

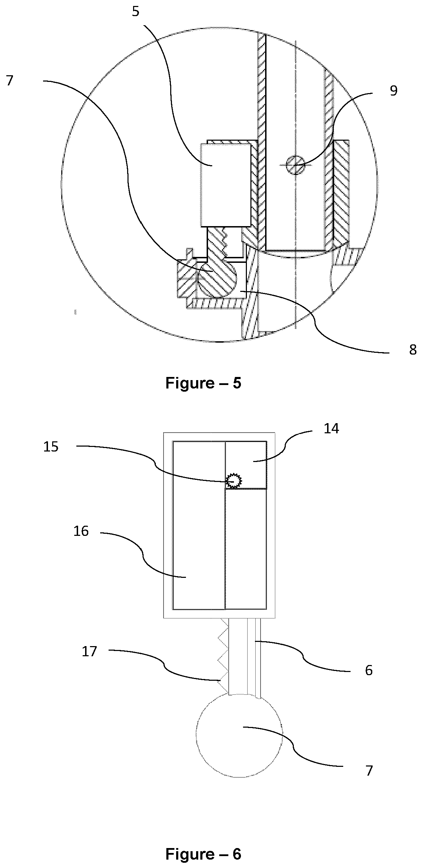

The wheel adjustment system (1) according to the invention comprises at least one cam (7) located on the lever (6) in the direction in which the shaft (3) extends, which allows the lever (6) to rotate the shaft (3) in such a way that it is centred on the axis in the direction in which the piston (2) extends, and a second position (II) in which the wheel (T) is moved from the first position (I) to a second position (II) in which the wheel (T) is brought to form a contact surface (camber angle) predetermined by the user, at least one groove (8) with a hollow structure, which is located in the protector (4) and which allows the angle of the shaft (3) to be changed so as to maintain the angle of the piston (2) in the first position (I) and the angle of the wheel (T) in the second position (II) by positioning the cam (7) so as to move partially in it, thereby allowing the wheel (T) to be moved between the first position (I) and the second position (II), thereby allowing the angle of the wheel (T) to change. (Figure 5)

There is a piston (2) on the body (G) that dampens the force due to the weight of the body (G) when the body (G) moving on the ground (Z) contacts the ground (Z). There is at least one wheel (T) on the piston (2), which provides the movement of the body (G) by moving forward. The wheel (T) has a first position (I) in which there is an angle difference with the body (G) due to the effect caused by the weight of the body (G). In the first position (I), the wheel (T) is positioned at an angle with the ground (Z) on the axis of the direction of travel. The wheel (T) is driven by a shaft (3), which is connected at one end to the wheel (T) and at the other end to the piston (2). A protector (4) is positioned on the piston (2), connecting the shaft (3) with the piston (2) and acting as a cover to prevent the fluid inside the piston (2) from escaping. The actuator (5) controls the perpendicularity angle of the wheel (T) by changing the angle of the axis on which the shaft (3) extends with respect to the ground (Z). The actuator (5) is positioned on the protector (4) and changes the angle of the shaft (3) by means of the lever (6). With the movement from the actuator (5), the lever (6) triggers the protector (4) to change the angle of the shaft (3) in the protector (4) with the direction in which the piston (2) extends. (Figure-1 and Figure 5)

The lever (6) allows the angle of the shaft (3) to change by means of the cam (7) on which it is located. There is a second position (II) in which the wheel (T) is positioned differently from the first position (I), preferably perpendicular to the ground (Z) at an angle predetermined by the user to ensure a high tire service life, so that the wheel (T) has a compression angle with a neutral camber angle with respect to the ground (Z). Through the groove (8) positioned on the protector (4), the movement of the cam (7) positioned on the side where the lever (6) extends from the actuator (5) towards the shaft (3) is transmitted to the shaft (3). The groove (8) is positioned on the side where the protector (4) is connected to the lever (6) and has a hollow structure in which the cam (7) can partially move. The positioning of the actuator (5) on the protector (4) allows easy assembly and maintenance. (Figure-4)

In one embodiment of the invention, the wheel adjustment system (1) comprises a rolling direction (Y) about the axis of the direction in which the wheel (T) travels, a hole (9) in the piston (2), at least one pin (10) in the protector (4) for moving the shaft (3) through the hole (9) from a point on the piston (2) along the rolling direction (Y) and for connecting the protector (4) to the piston (2). The wheel (T) has a rolling direction (Y) in which the wheel (T) makes a negative and a positive camber angle. By passing the pin (10) through the hole (9) of the protector (4) on the piston (2), the protector (4) moves with the hole (9) as the center of rotation. The pin (10) preferably allows the connecting protector (4) to rotate around the hole (9) in the direction in which the piston (2) extends. The rolling direction (Y) changes the angle of the axis on which the shaft (3) extends with respect to the ground (Z), thus changing the angle of the wheel (T) to the ground. The shaft (3) moves at an angle predetermined by the user so that the hole (9) is the center of the spring. (Figure-5)

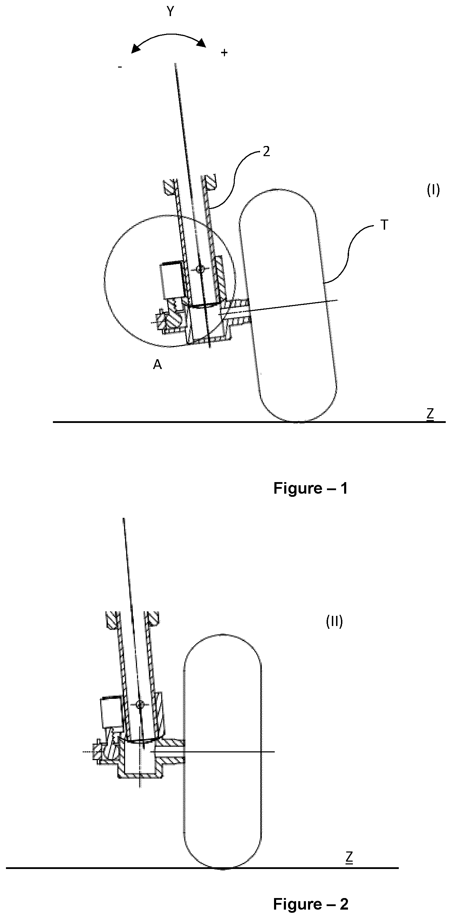

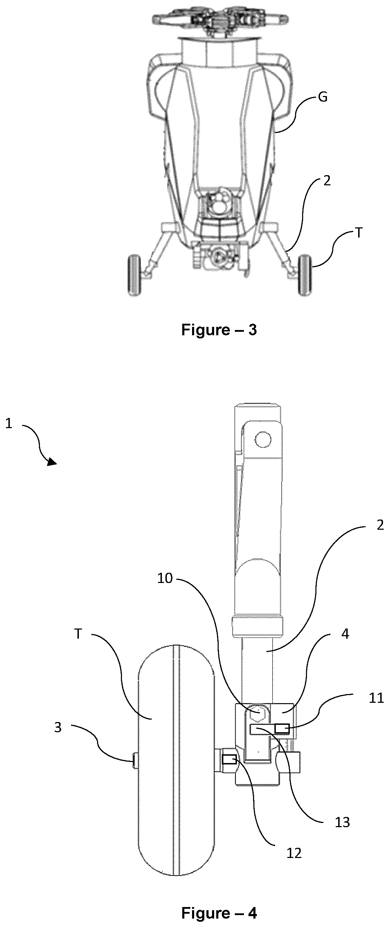

In one embodiment of the invention, the wheel adjustment system (1) comprises a first sensor (11) located on the shaft (3) for sensing force data transmitted from the wheel (T) to the shaft (3), a second sensor (12) located on the protector (4) for sensing force data generated on the piston (2), and a processor (13) for controlling the actuator (5) for moving the shaft (3) from the first position (I) to the second position (II) with the data received from the first sensor (11) and the second sensor (12). In order to adjust the compression angle or camber angle of the wheel (T), the angle of the axis in the direction in which the shaft (3) extends relative to the ground (Z) is controlled by the preferential force values measured from the shaft (3) by means of the first sensor (11) preferably measuring force on the shaft (3). When the preferential force values of the values in the first position (I), which change the angle of the piston (2) relative to the ground (Z) due to the force effect applied to the ground (Z) due to the weight of the body (G), meet the measurement value predetermined by the user according to the values measured by the first sensor (11) and the value measured from the second sensor (12), the shaft (3) is controlled by the processor (13) and brought to the second position (II) by means of the actuator (5). (Figure 2 and Figure-4)

In one embodiment of the invention, the wheel adjustment system (1) comprises a system (101) for comparing data from the first sensor (11) with data from the second sensor (12),
- If the data transmitted from the sensor (11) of the first sensor (11) is greater than the data transmitted from the sensor (12) of the second sensor (12), the cam (7) is triggered by means of the actuator (5) and moved in the groove (8), and the command (102) is transmitted to the actuator (5) to move the lever (6) towards the body (G) on the axis perpendicular to the direction in which the ground (Z) extends, in order to increase the angle of the shaft (3) to the wheel (T) with respect to the ground (Z) in a clockwise direction,
- If the data transmitted from the first sensor (11) is smaller than the data transmitted from the second sensor (12), the cam (7) is triggered by the actuator (5) and moved in the groove (8), and the actuator (5) is commanded to move the lever (6) towards the ground (Z) on the axis perpendicular to the direction in which the ground (Z) extends, in order to increase the angle of the shaft (3) with respect to the ground (Z) of the wheel (T) in a counterclockwise direction (103),
- The processor (13) includes the steps of transmitting the command (104) to the actuator (5) to keep the lever (6) at the same level in order to keep the movement of the wheel (T) constant if the data transmitted from the first sensor (11) is equal to the data transmitted from the second sensor (12). The data received from the first sensor (11) and the second sensor (12), which are preferably force measurement devices, are compared with each other to calculate that the force value is within the values predetermined by the user. The processor (13) mixes the reading from the first sensor (11) with the reading from the second sensor (12) in order to change the angle of the shaft (3) to give the wheel (T) a camber angle. If the reading of the first sensor (11) is greater than the reading of the second sensor (12), the processor (13) gives a command to the actuator (5) and causes the lever (6) to move the body (G). With the movement of the lever (6), the shaft (3) is moved by means of the cam (7) in the groove (8) and its angle is changed. With the change of the angle of the direction in which the shaft (3) extends relative to the ground (Z), the wheel (T) is moved clockwise with a positive camber angle in order to position the wheel (T) preferably almost perpendicular to the ground (Z). The wheel (T), which is positioned in a negative camber angle position, is given a positive camber angle by means of actuator (5) so that it has a neutral angle. By comparing the data received from the first sensor (11) with the data received from the second sensor (12), if the data received from the first sensor (11) is smaller, the processor (13) commands the actuator (5) to move the lever (6) in the ground (Z) direction. With the change in the positive angle of the direction of the shaft (3) relative to the ground (Z), the wheel (T) is moved counterclockwise with a negative camber angle in order to position the wheel (T) preferably almost perpendicular to the ground (Z). If the values measured on the first sensor (11) and the second sensor (12) are equal, the processor (13) commands the actuator (5) to keep the lever (6) stable in order to ensure that the wheel (T) remains in the same position within the value range predetermined by the user. In order to continuously control the compression angle of the wheel (T), the processor (13) repeats the angle of the shaft (3) in a closed loop by triggering the lever (6) when the wheel (T) has a negative and positive camber angle. The parallelism of the shaft (3) to the ground (Z) is maintained by means of the processor (13) which enables closed loop operation. In this way, the wheel (T) is self-controlled by the processor (13) and the lifetime of the wheel (T) is extended. (Figure-7)

In one embodiment of the invention, the wheel adjustment system (1) comprises at least one servo motor (14) which is located in the actuator (5) and provides movement of the lever (6), at least one gear (15) which is triggered by the servo motor (14), and at least one gear set (16) which transfers the movement on the gear (15) to the lever (6) with a high torque. The movement of the lever (6) is provided by means of the servo motor (14) having a force capable of supporting the weight of the body (G). At least one gear set (16) is used to convert the force of the servo motor (14) into a high torque ratio by means of the gear (15) on the servo motor (14). In this way, the shaft (3) is easily moved against the load of the body (G). (Figure-6)

In one embodiment of the invention, the wheel adjustment system (1) comprises a plurality of threads (17) on the surface of the lever (6) in engagement with the gear set (16), which enable the lever (6) to be moved by the gear set (16). Thanks to the multiple threads (17) on the lever (6), the actuator (5) works in the form of a rack and pinion system, allowing the lever (6) to be driven linearly and converting the rotational motion on the gear set (16) connected to the servo motor (14) into linear motion. (Figure-6)

In one embodiment of the invention, the wheel adjustment system (1) comprises an lever (6) on the body (G) of an aircraft, which is actuated by data received from the first sensor (11) and the second sensor (12) to move the wheel (T) in the landing gear between the first position (I) and the second position (II). The lever (6), which is moved by means of the actuator (5), is preferably positioned on the landing gear of the aircraft to control the camber angle on the wheel (T) due to the contact of the landing gear with the ground (Z). By positioning the actuator (5) on the protector (4) where the piston (2) in the landing gear is connected to the wheel (T), the compression angle of the wheel (T) to the ground (Z) is controlled. When the aircraft lands on the ground (Z), there is a first position (I) where the angle of the wheel (T) is positioned in such a way that it has an angle different from a position almost perpendicular to the ground (Z) due to the flexing in the landing gear. In order to preserve the service life of the wheel (T) in the landing gear, it is necessary to control the compression angle by moving the wheel (T) to the second position (II). In order to bring the wheel (T) to the desired angle, the amount of movement of the lever (6) is determined by means of the first sensor (11) and the second sensor (12). In this way, when the aircraft lands, the wheels (T) are positioned at the angle predetermined by the user, preferably at a neutral camber angle. (Figure- 3 and Figure- 4)

## Claims

1. A wheel adjustment system (1), **comprising** a body (G), a ground (Z) on which the body (G) moves, at least one piston (2) located on the body (G) which damps the reaction force on the ground (Z) against the weight of the body (G) due to the body (G) contacting the ground (Z), at least one wheel (T) located on the piston (2) and allowing the body (G) to move on the ground (Z), a first position (I) in which the wheel (T) is positioned in a predetermined position, at least one shaft (3) connecting the wheel (T) and the piston (2) and transferring to the piston (2) the force generated when the wheel (T) contacts the ground (Z), at least one protector (4) located in the area where the piston (2) is connected to the shaft (3), which prevents the outflow of fluid from the piston (2), which is positioned on the shaft (3) and is located at the end where the shaft (3) is connected to the piston (2), at least one actuator (5) located on the protector (4), which allows changing the angle of the wheel (T) in the first position (I) with respect to the directional axis along which it moves on the ground (Z), at least one lever (6) on the actuator (5), which is connected at one end to the shaft (3) and at the other end to the actuator (5) so as to be substantially parallel to the piston (2), thereby enabling the actuator (5) to trigger the shaft (3), **characterized by** at least one cam (7) located on the lever (6) in the direction in which the shaft (3) extends, which allows the lever (6) to rotate the shaft (3) so that the shaft (3) is centered on the axis in the direction in which the piston (2) extends, a second position (II) in which the wheel (T) is moved from the first position (I) to a second position (II) in which the wheel (T) is brought to form a contact surface predetermined by the user, at least one groove (8) having a hollow structure, which is located in the protector (4) and which allows the angle of the shaft (3) to be changed so as to maintain the angle of the piston (2) in the first position (I) and the angle of the wheel (T) in the second position (II) by positioning the cam (7) to move partially in the groove (8), thereby allowing the wheel (T) to be moved between the first position (I) and the second position (II), thereby allowing the angle of the wheel (T) to change.

2. A wheel adjustment system (1) according to claim 1, **characterized by** a rolling direction (Y) about a directional axis along which the wheel (T) moves, a hole (9) in the piston (2), at least one pin (10) in the guard (4) for connecting the guard (4) to the piston (2) in the hole (9) through which the shaft (3) moves along the rolling direction (Y) from a point on the piston (2).

3. A wheel adjustment system (1) according to claim 1 or claim 2, **characterized by** a first sensor (11) located on the shaft (3), which detects the force data transmitted from the wheel (T) to the shaft (3), and a second sensor (12) located on the guard (4), which detects the force data generated on the piston (2), at least one processor (13) which controls the actuator (5) for moving the shaft (3) from the first position (I) to the second position (II) using data received from the first sensor (11) and the second sensor (12).

4. A wheel adjustment system (1) according to claim 3, **characterized by** the processor (13) processing the steps
- comparing the data from the first sensor (11) with the data from the second sensor (12) (101),
- if the data transmitted from the first sensor (11) is greater than the data transmitted from the second sensor (12), transmitting a command to the actuator (5) to move the lever (6) towards the body (G) on the axis perpendicular to the direction in which the ground (Z) extends by triggering the cam (7) by means of the actuator (5) and moving the cam (7) in the groove (8) to increase the angle of the shaft (3) of the wheel (T) relative to the ground (Z) in a clockwise direction (102),
- if the data transmitted from the first sensor (11) is smaller than the data transmitted from the second sensor (12), transmitting a command to the actuator (5) to move the lever (6) towards the ground (Z) on the axis perpendicular to the direction in which the ground (Z) extends by triggering the cam (7) by means of the actuator (5) and moving the cam (7) in the groove (8) to increase the angle of the shaft (3) of the wheel (T) relative to the ground (Z) in a counterclockwise direction (103),
- if the data transmitted from the first sensor (11) is within a limit value predetermined by the user with the data transmitted from the second sensor (12), transmitting a command to the actuator (5) to keep the lever (6) at the same level in order to keep the movement of the wheel (T) constant (104).

5. A wheel adjustment system (1) according to any one of the preceding claims, **characterized by** at least one servo motor (14) located in the actuator (5) providing the movement of the lever (6), at least one gear (15) triggered by the servo motor (14), at least one gear set (16) that transfers the movement on the gear (15) to the lever (6) with high torque.

6. A wheel adjustment system (1) according to claim 5, **characterized by** a plurality of threads (17) on the surface of the lever (6) in engagement with the gear set (16), which enable the lever (6) to be moved with the gear set (16).

7. A wheel adjustment system (1) according to any one of claim 3 to claim 6, **characterized by** the lever (6) being actuated by data received from the first sensor (11) and the second sensor (12) to move the wheel (T) in the landing gear between the first position (I) and the second position (II), which is located on the body (G) of the aircraft.
